# EUROPÄISCHE PATENTSCHRIFT

(11) **EP 1 447 900 B1**
(45) Veröffentlichungstag und Bekanntmachung des Hinweises auf die Patenterteilung: **23.05.2007**
(21) Anmeldenummer: 04002855.7
(22) Anmeldetag: 10.02.2004
(51) Int. Cl.: H02K 13/00, H02K 23/66, H02K 11/04, H02K 5/14

(54) **Stromversorgungseinheit**
Power supply unit
Unité d'alimentation électrique

(30) Priorität: 11.02.2003 DE 10306692
(43) Veröffentlichungstag der Anmeldung: 18.08.2004
(73) Patentinhaber: AFL Europe GmbH, 72636 Frickenhausen (DE)
(72) Erfinder: Skofljanec, Robert, 78345 Moos (DE)
(74) Vertreter: Hoeger, Stellrecht & Partner Patentanwälte

(56) Entgegenhaltungen:
- EP-A- 1 022 210
- DE-A- 10 133 767
- DE-A- 19 709 778
- DE-A- 19 736 300
- US-A- 4 840 222

## Beschreibung

Die Erfindung betrifft eine Stromversorgungseinheit für einen Kommutator eines Elektromotors, umfassend einen Bürstenträger mit in diesem angeordneten und mit dem Kommutator zusammenwirkenden Bürsten.

Derartige Stromversorgungseinheiten sind aus dem Stand der Technik bekannt. Üblicherweise werden derartige Stromversorgungseinheiten in ein Motorgehäuse eines Elektromotors eingesetzt, wie zum Beispiel aus EP 1022210, DE 197 36 300 und DE 101 33 767 bekannt ist.

Darüber hinaus sind derartige Stromversorgungseinheiten so ausgebildet, daß diesen auch noch eine elektrische und/oder elektronische Schaltungseinheit zugeordnet ist, wobei derartige elektrische und/oder elektronische Schaltungseinheiten aus Gründen des Schutzes der elektronischen Schaltung eingegossen werden müssen, um den Zutritt von Feuchtigkeit und auch Schmutz zu den Bauteilen zu verhindern.

Ein derartiges Eingießen elektrischer und/oder elektronischer Schaltungseinheiten in eine Einbettmasse, vorzugsweise Harz, hat jedoch den Nachteil, daß sich dabei eine Reihe von Nachteilen ergeben.

Derartige Nachteile sind beispielsweise die Kosten derartiger für insbesondere rauhe Umgebungsbedingungen erforderlichen Vergußmassen.

Der Erfindung liegt daher die Aufgabe zugrunde, eine Stromversorgungseinheit der gattungsgemäßen Art derart zu verbessern, daß diese möglichst kostengünstig und funktionssicher hergestellt werden kann.

Diese Aufgabe wird erfindungsgemäß durch die im unabhängigen Anspruch 1 definierte Stromversorgungseinheit gelöst.

Der Vorteil der erfindungsgemäßen Lösung ist dadurch gegeben, daß durch das abdichtende Elektronikgehäuse die Vergußmassen eingespart werden können. Dies hat einerseits zur Folge, daß die Lösung montagefreundlicher und kostengünstiger ist, andererseits entfallen weitere Nachteile der bekannten Vergußmassen, so daß die erfindungsgemäße Lösung gegenüber der Verwendung einer Vergußmasse leichter ist, sich einfach recyceln läßt, eine höhere Resistenz gegenüber Reagenzien über den gesamten Temperaturbereich aufweist und daß darüber hinaus eine höhere Temperaturwechselbeständigkeit besteht, so daß die erfindungsgemäße elektronische Schaltungseinheit besser geschützt und somit noch funktionssicherer wird.

Mit der erfindungsgemäßen Lösung wird somit die Möglichkeit geschaffen, die Stromversorgungseinheit in einen Elektromotor zu integrieren und die dauerhafte Funktionssicherheit auch bei kraftfahrzeugtypischen Umgebungsbedingungen zu gewährleisten.

Unter einem funktionssicheren Abschluß der Schaltungseinheit gegenüber der Umgebung durch das Elektronikgehäuse ist dabei zu verstehen, daß das Elektronikgehäuse zumindest das Eindringen von partikulärem Schmutz und Feuchtigkeit verhindert. Noch vorteilhafter ist es jedoch, wenn das Elektronikgehäuse die Schaltungseinheit im wesentlichen flüssigkeitsdicht und/oder gasdicht umschließt.

Eine besonders vorteilhafte erfindungsgemäße Lösung sieht darüber hinaus vor, daß die in dem Bürstenträger angeordneten Bürsten außerhalb des von dem Elektronikgehäuse gebildeten Innenraums angeordnet sind. Diese Lösung ist deshalb von Vorteil, weil aufgrund der Wechselwirkung zwischen den Bürsten und dem Kommutator stets ein Abrieb entsteht, der ebenfalls zu Schmutzablagerungen führt, die sich jedoch nicht in dem Innenraum und somit im Bereich der elektronischen Schaltungseinheit niederschlagen sollen.

Weitere Ausführungsformen der Erfindung sind Gegenstand der abhängigen Ansprüche 2 - 32.

Eine besonders vorteilhafte Ausführungsform des Elektronikgehäuses sieht dabei vor, daß diese sich ringförmig um einen Aufnahmeraum für den Kommutator erstreckt, so daß dadurch eine besonders kompakte und einfach in einen Elektromotor integrierbare Bauweise für die Stromversorgungseinheit möglich ist, die insgesamt zu einer geringen Bautiefe des Elektromotors beiträgt.

Hinsichtlich der Ausbildung des Bürstenträgers wurden bislang keine näheren Angaben gemacht. So sieht ein vorteilhaftes Ausführungsbeispiel vor, daß der Bürstenträger aus einem elektrisch nicht leitenden Material hergestellt ist, vorzugsweise aus Kunststoff, so daß sich einerseits der Bürstenträger kostengünstig herstellen läßt und andererseits der Bürstenträger gleichzeitig als isolierender Körper die Bürsten aufnehmen und lagern kann.

Ferner ist der Bürstenträger vorzugsweise so ausgebildet, daß er eine sich quer zur Drehachse des Kommutators erstreckende Trägerplatte aufweist, welche insbesondere so angeordnet ist, daß sie den Kommutator umschließt.

Bei einer derartigen Ausbildung des Bürstenträgers ist vorzugsweise vorgesehen, daß der Bürstenträger auf einer der Abdeckhaube zugewandten Seite der Trägerplatte angeordnete und durch Kanalgehäuse umschlossene Bürstenkanäle aufweist, so daß durch diese Anordnung eine besonders raumsparende Bauweise der Schaltungseinheit realisierbar ist.

Vorzugsweise ist ferner vorgesehen, daß der Bürstenträger einen den Aufnahmeraum für den Kommutator umschließenden Ringkörper aufweist.

Vorzugsweise ist dabei der Ringkörper so ausgebildet, daß dieser von den Bürstenkanälen durchsetzt ist, so daß die Bürsten über den Ringkörper radial nach innen in Richtung der Drehachse über den Ringkörper überstehen und mit dem Kommutator in Wechselwirkung treten können.

Hinsichtlich der Anordnung der Abdeckhaube wurden im Zusammenhang mit der bisherigen Erläuterung der einzelnen Ausführungsbeispiele ebenfalls keine näheren Angaben gemacht. So sieht eine vorteilhafte Ausführungsform vor, daß die Abdeckhaube sich radial zu einer Drehachse des Kommutators außerhalb des Aufnahmeraums für den Kommutator erstreckt, um insbesondere ebenfalls eine kompakte Bauweise der Stromversorgungseinheit mit insbesondere geringer Bautiefe zu ermöglichen.

Zweckmäßigerweise ist dabei die Abdeckhaube so ausgebildet, daß sie mit einer Innenwand den Aufnahmeraum für den Kommutator umschließt.

Bei dieser Lösung ist es günstig, wenn die Innenwand in Fortsetzung des Ringkörpers des Bürstenträgers verläuft, so daß eine optimale raumsparende Bauweise des Elektronikgehäuses realisiert werden kann.

Um die notwendige Abdichtung zu gewährleisten, ist zweckmäßigerweise vorgesehen, daß die Innenwand abgedichtet an dem Ringkörper des Bürstenträgers anliegt.

Ferner ist vorzugsweise vorgesehen, daß die Abdeckhaube eine Außenwand aufweist, welche den Innenraum des Elektronikgehäuses zweckmäßigerweise gegenüber dem Motorgehäuse abschließt.

Auch hier ist vorteilhafterweise vorgesehen, daß die Außenwand abgedichtet mit der Trägerplatte des Bürstenträgers abschließt und somit der geforderte hermetische Abschluß des Innenraums gegenüber der Umgebung auch im Bereich der Verwendung zwischen der Außenwand und der Trägerplatte realisierbar ist.

Um den erforderlichen dichten und funktionssicheren Abschluß des Innenraums des Elektronikgehäuses gegenüber der Umgebung zu gewährleisten ist außerdem erforderlich, daß die Abdeckhaube fest mit dem Bürstenträger verbunden ist. Dies läßt sich auf verschiedenste Art und Weise, beispielsweise durch vielerlei Arten von Verbindungselementen realisieren.

Eine besonders günstige Art der Verbindung sieht vor, daß die Außenwand der Abdeckhaube an der Trägerplatte des Bürstenträgers fixiert ist.

Über diese Fixierung der Abdeckhaube mit der Außenwand an der Trägerplatte des Bürstenträgers besteht eine besonders einfach realisierbare Möglichkeit der Befestigung von Abdeckhaube und Bürstenträger.

Die Verbindung zwischen der Abdeckhaube und dem Bürstenträger kann beispielsweise eine Crimp-Verbindung sein.

Fertigungstechnisch besonders einfach läßt sich diese Fixierung dadurch realisieren, daß die Abdeckhaube mit einer Umbördelung an der Trägerplatte des Bürstenträgers fixiert ist, so daß insbesondere eine Montage ohne zusätzliche Fixierelemente, wie beispielsweise Schrauben, möglich ist.

Dabei bildet eine Umbördelung eine besonders einfache und kostengünstige Möglichkeit, einen Abschluß zwischen der Abdeckhaube und dem Bürstenträger herzustellen, der die für die Funktionssicherheit der Schaltungseinheit erforderliche Dichtigkeit gewährleistet.

Die Umbördelung kann dabei abschnittsweise in Azimutalrichtung erfolgen oder auch im wesentlichen umlaufend.

Noch funktionssicherer läßt sich die Verbindung zwischen der Abdeckhaube und dem Bürstenträger dann herstellen, wenn zwischen der Abdeckhaube und der Trägerplatte des Bürstenträgers eine Dichtung angeordnet ist, die vorzugsweise im Bereich der Umbördelung angeordnet ist.

Ferner ist zweckmäßigerweise auch im Bereich des sich an den Ringkörper des Bürstenträgers anschließenden Teils der Abdeckung eine Dichtung vorgesehen, insbesondere am Übergang vom Ringkörper zur Innenwand der Abdeckhaube, wobei durch die Verbindung der Abdeckhaube mit der Trägerplatte auch gleichzeitig auch die erforderliche Pressung für die Dichtung zwischen dem Ringkörper und der Innenwand der Abdeckhaube erzeugbar ist, so daß in diesem Bereich keine zusätzlichen Maßnahmen zur Fixierung der Abdeckhaube relativ zum Bürstenträger erforderlich sind.

Da die elektronische Schalteinheit üblicherweise mit Leistungsbauteilen versehen ist, die Wärme erzeugen, ist für eine gute Wärmeabfuhr der von den Leistungsbauteilen der Schaltungseinheit erzeugten Wärme Sorge zu tragen.

Beispielsweise wäre dabei eine Wärmeabfuhr über den Bürstenträger möglich, wobei dies insoweit problematisch ist, als im Bereich des Bürstenträgers aufgrund der am Kommutator anliegenden Bürsten ohnehin Wärme entsteht.

Aus diesem Grund ist vorzugsweise vorgesehen, daß die Abdeckhaube einen Kühlkörper für mindestens ein Leistungsbauteil der Schaltungseinheit bildet.

Unter einem Leistungsbauteil im Sinne der vorliegenden Erfindung ist dabei jedes aufgrund der umgesetzten elektrischen Leistung zur Erwärmung neigende Bauteil zu verstehen, insbesondere sind derartige Leistungsbauteile Leistungshalbleiter, wie Halbleiterschalter oder Halbleiterdioden.

Um einen optimalen Wärmeübergang von dem mindestens einen Leistungsbauteil auf die Abdeckhaube zu erzeugen, ist vorzugsweise vorgesehen, daß das mindestens eine Leistungsbauteil kraftbeaufschlagt an der Abdeckhaube anliegt.

Dabei kann die Abdeckhaube so angeordnet sein, daß sie beispielsweise noch einen sich zum Leistungsbauteil erstreckenden Kühlfinger aufweist.

Aus Kostengründen ist es jedoch besonders einfach und vorteilhaft, wenn das mindestens eine Leistungsbauteil mit seinem Kühlkörper an einer Innenseite der Abdeckhaube anliegt.

Bei einer Vielzahl von Leistungsbauteilen ist vorzugsweise vorgesehen, daß diese so angeordnet sind, daß sie mit der Abdeckhaube, insbesondere einer Außenwand derselben, in Wärmekontakt bringbar sind.

Vorzugsweise ist das mindestens eine Leistungsbauteil so angeordnet, daß es an einer für dieses vorgesehenen Wärmekontaktstelle der Abdeckhaube anliegt, so daß eine definierte Kontaktstelle an der Abdeckhaube einen optimalen Wärmeübergang gewährleistet.

Eine besonders zweckmäßige Lösung sieht dabei vor, daß das mindestens eine Leistungsbauteil mit seinem Kühlkörper an einem abgeflachten Bereich der Innenseite der Abdeckhaube anliegt.

Vorzugsweise ist dabei der abgeflachte Bereich an der Innenseite der Außenwand der Abdeckhaube angeordnet.

Um einen gute Wärmekontakt zwischen dem Kühlkörper und der Abdeckhaube zu gewährleisten ist vorzugsweise vorgesehen, daß die Abdeckhaube mit in den Innenraum vorstehenden Stegen versehen ist, zwischen denen der Kühlkörper des mindestens einen Leistungsbauteils liegt.

Durch derartige Stege läßt sich der Wärmeübergang weiter verbessern.

Noch vorteilhafter ist es, wenn die Stege durch in Richtung des Kühlkörpers des mindestens einen Leistungsbauteils umgebogene Stegenden den Kühlkörper des mindestens einen Leistungsbauteils an der Abdeckhaube fixieren. Durch dieses Fixieren ist ein dauerhafter Wärmekontakt zwischen dem Kühlkörper und der Abdeckhaube gewährleistet, ohne daß zusätzliche Fixierelemente hierzu notwendig sind.

Besonders zweckmäßig ist es, wenn die Stege mit ihren umgebogenen Stegenden den Kühlkörper gegen die Abdeckhaube gedrückt halten.

Hinsichtlich der Ausbildung der Abdeckhaube selbst wurden im Zusammenhang mit der bisherigen Erläuterung der einzelnen Ausführungsbeispiele keine näheren Angaben gemacht. So wäre es beispielsweise denkbar, die Abdeckhaube aus einem thermisch gut leitenden Material herzustellen.

Als besonders kostengünstiges und geeignetes Material empfiehlt sich dabei Metall für die Abdeckhaube.

Um mit diesem Material der Abdeckhaube eine einfache und insbesondere kostengünstig herzustellende Verbindung zwischen der Abdeckhaube und dem Bürstenträger realisieren zu können, hat es sich als zweckmäßig erwiesen, wenn die Abdeckhaube aus einem plastisch verformbaren Metall hergestellt ist.

Insbesondere aus Gründen der Gewichtsersparnis empfiehlt es sich, wenn die Abdeckhaube aus Leichtmetall hergestellt ist.

Als konkrete Materialien für die Abdeckhaube werden bei einigen Ausführungsbeispielen Aluminium eingesetzt, wobei die Abdeckhaube vorzugsweise durch Aluminium mittels Fließpressen hergestellt ist.

Hinsichtlich der in dem Elektronikgehäuse anzuordnenden Schaltungseinheiten wurden bislang keine näheren Angaben gemacht. So wäre es beispielsweise denkbar, die Schaltungseinheit in Form mehrerer, beispielsweise segmentierter Platinen in dem Innenraum des Elektronikgehäuses unterzubringen.

Aus Gründen der Montagevereinfachung und somit kostengünstiger Herstellung hat sich als vorteilhaft erwiesen, wenn die Schaltungseinheit eine ringförmige, in der Abdeckhaube angeordnete Schaltungsplatine aufweist.

Ferner hat es sich, insbesondere um eine gute Wärmeleitung zwischen den Leistungsbauteilen und der Abdeckhaube herzustellen, als günstig erwiesen, wenn die Leistungsbauteile auf einer dem Bürstenträger zugewandten Seite der Schaltungsplatine der Schaltungseinheit angeordnet sind. In diesem Fall läßt sich die Schaltungsplatine in die Abdeckhaube einlegen und anschließend vor Aufsetzen des Bürstenträgers auf die Abdeckhaube besteht die Möglichkeit, den Wärmekontakt zwischen den Leistungsbauteilen und der Abdeckhaube in der beschriebenen Art und Weise herzustellen.

Die Erfindung betrifft jedoch nicht nur eine Stromversorgungseinheit für einen Elektromotor, sondern vorzugsweise auch einen Elektromotor umfassend ein Motorgehäuse, einen im Motorgehäuse drehbar angeordneten Rotor, einen im Motorgehäuse angeordneten Bürstenträger, wobei erfindungsgemäß der Elektromotor mit einer Stromversorgungseinheit versehen ist, die eines oder mehrere der vorstehend erläuterten Merkmale aufweist.

Insbesondere ist es dabei vorteilhaft, wenn die Abdeckhaube im Motorgehäuse von Kühlluft, beispielsweise in Form eines Kühlluftstroms, umströmbar ist, um somit eine besonders effiziente Kühlung der insbesondere von den Leistungsbauteilen auf die Abdeckhaube übertragenen Wärme zu gewährleisten.

Beispielsweise ist es dabei auch denkbar, die Abdeckhaube noch mit in den Kühlluftstrom hineinragenden Kühlrippen zu versehen.

Eine besonders günstige Lösung sieht dabei vor, daß die Kühlluft durch einen Zwischenraum zwischen dem Motorgehäuse und der Abdeckhaube hindurchtritt, um insbesondere die Abdeckhaube auf ihrer dem Motorgehäuse zugewandten Seite effizient zu kühlen.

Alternativ oder ergänzend dazu sieht ein weiteres vorteilhaftes Ausführungsbeispiel vor, daß die Kühlluft durch den Aufnahmeraum für den Kommutator hindurchtritt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen.
- Fig. 1: einen Längsschnitt durch ein erstes Ausführungsbeispiel eines erfindungsgemäßen Elektromotors;
- Fig. 2: einen Längsschnitt ähnlich Fig. 1 längs Linie 2-2 in Fig. 1;
- Fig. 3: eine Explosionsdarstellung des ersten Ausführungsbeispiels des erfindungsgemäßen Elektromotors mit Blick von unten und von einer Stromversorgungseinheit abgenommener Abdeckhaube;
- Fig. 4: eine Explosionsdarstellung des ersten Ausführungsbeispiels des erfindungsgemäßen Elektromotors von oben bei abgenommener Abdeckhaube und sichtbarer Schaltungseinheit;
- Fig. 5: einen Schnitt längs Linie 5-5 in Fig. 1 mit noch nicht umgebogenen Stegen zur Fixierung von Leistungsbauteilen;
- Fig. 6: einen Schnitt entsprechend Fig. 5 mit durch die umgebogenen Stege fixierten Leistungsbauteilen;
- Fig. 7: einen Schnitt ähnlich Fig. 5 durch ein zweites Ausführungsbeispiel eines erfindungsgemäßen Elektromotors mit durch Federkörper an der Abdeckhaube angelegten Leistungsbauteilen und
- Fig. 8: eine perspektivische Ansicht einer erfindungsgemäßen Stromversorgungseinheit mit Kabelbaum und Steckereinheiten.

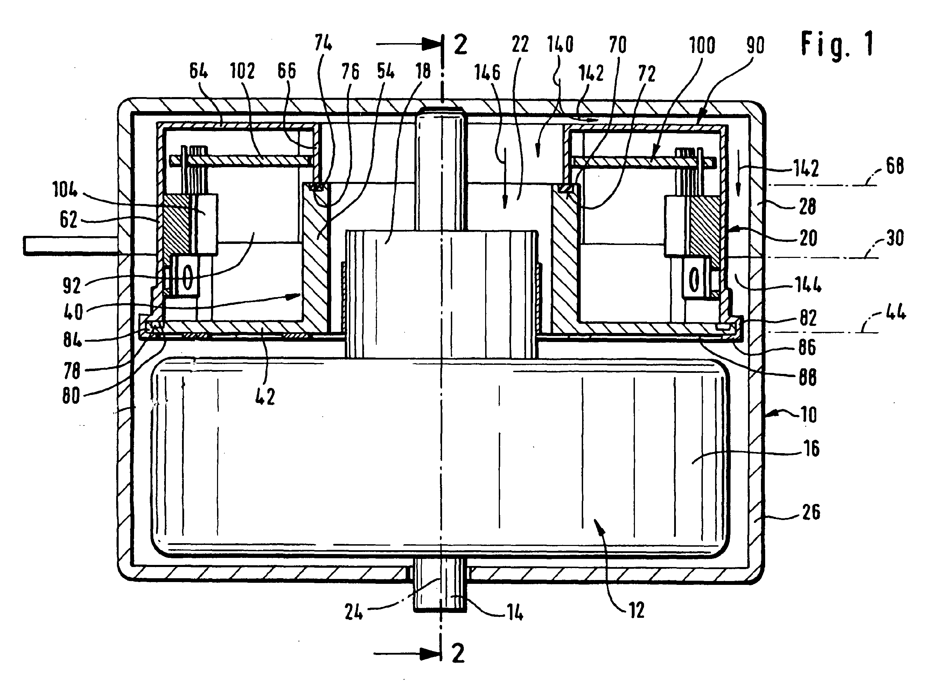

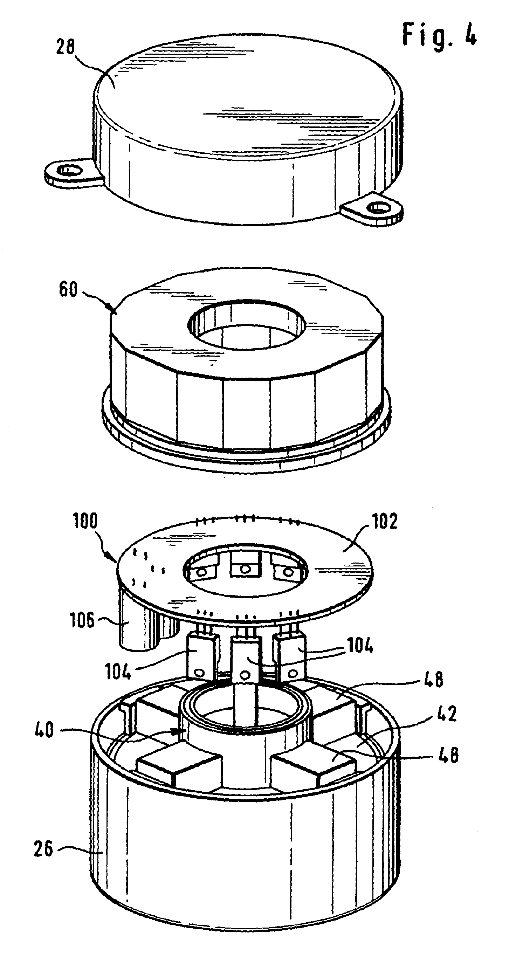

Ein Ausführungsbeispiel eines erfindungsgemäßen Antriebsmotors, beispielsweise eines Lüftermotors, dargestellt in den Fig. 1 bis 4, umfaßt ein Motorgehäuse 10, in welchem ein Rotor 12 mit einer Rotorwelle 14 drehbar gelagert ist.

Der Rotor 12 umfaßt einen auf der Welle 14 sitzenden Anker 16 und einen auf einer Seite des Ankers 16 angeordneten Kommutator 18, über welchen eine Stromversorgung von nicht dargestellten Ankerwicklungen des Ankers 16 erfolgt.

Zur Stromversorgung des Kommutators 18 ist in dem Motorgehäuse 10 eine als Ganzes mit 20 bezeichnete Stromversorgungseinheit vorgesehen, welche sich vorzugsweise ringförmig um einen Aufnahmeraum 22 für den Kommutator 18 erstreckt, wobei der Aufnahmeraum 22 die gesamte Stromversorgungseinheit 20 in Richtung einer Drehachse 24 der Rotorwelle 14 durchsetzt.

Vorzugsweise ist das Motorgehäuse 10 zweiteilig ausgebildet und umfaßt ein Ankergehäuse 26 und einen Gehäusedeckel 28, die durch eine senkrecht zur Drehachse 24 verlaufende Trennebene 30 voneinander getrennt sind.

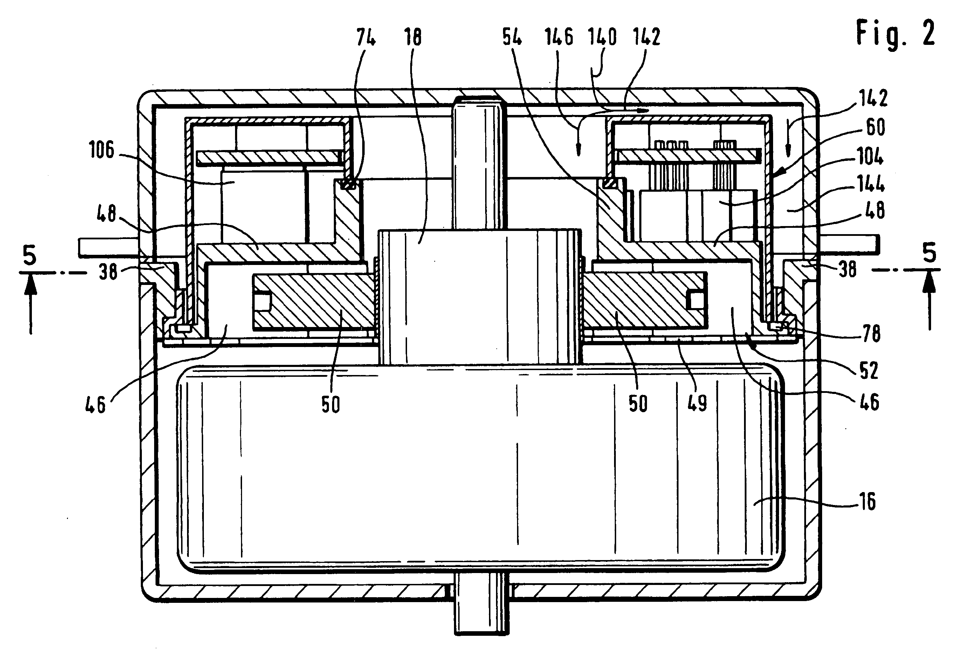

Die Stromversorgungseinheit 20 umfaßt, wie in Fig. 1 und 2 dargestellt, einen als Ganzes mit 40 bezeichneten Bürstenträger, welcher über Haltefortsätze 38 an dem Motorgehäuse 10 gehalten ist. Der Bürstenträger 40 umfaßt eine Trägerplatte 42, die sich vorzugsweise in einer Ebene 44 senkrecht zur Drehachse 24 und parallel zur Trennebene 30 erstreckt und dem Anker 16 zugewandt angeordnet ist.

An diese Trägerplatte 42 des Bürstenträgers 40 sind Kanalgehäuse 48 angeformt, welche Bürstenkanäle 46 umschließen, die vorzugsweise zum Anker 16 hin offen sind und mit dem Kommutator 18 zusammenwirkende Bürsten 50 oder Kohlen 50 zur Stromversorgung des Kommutators 18 aufnehmen, welche in diesen Bürstenkanälen 46 radial zur Drehachse 24 beweglich und in Richtung des Kommutators 18 durch nicht dargestellte elastische Kraftspeicher, wie zum Beispiel Federn, beaufschlagt sind.

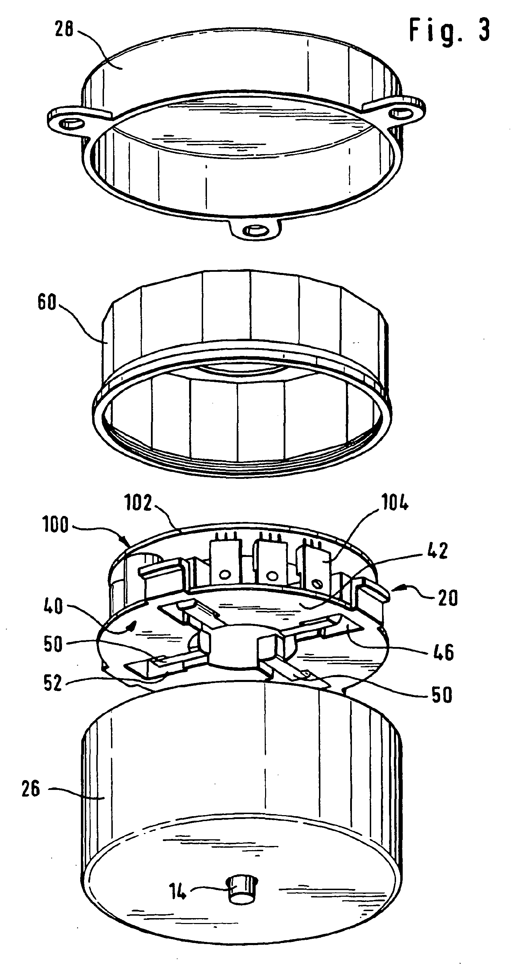

Vorzugsweise sind dabei die Bürstenkanäle 46, wie insbesondere in Fig. 3 erkennbar, zum Anker 16 hin mit Öffnungen 52 versehen, so daß über diese Öffnungen 52 ein Einsetzen der Bürsten 50 in die Bürstenkanäle 46 möglich ist.

Die Bürsten 50 selbst werden über in Form eines Stanzgitters 48 realisierte Leitungsbahnen kontaktiert, wobei das Stanzgitter auf einer dem Anker 16 zugewandten Seite der Trägerplatte 42 liegt.

Ferner gehen die Kanalgehäuse 48 und die Trägerplatte in einen Ringkörper 54 über, welcher radial außerhalb des Kommutators 18 liegt und den Aufnahmeraum 22 umschließt, wobei die Bürstenkanäle 46 den Ringkörper 54 radial zur Drehachse 24 durchsetzen, damit die Bürsten 50 in radialer Richtung an dem Kommutator 18 anlegbar sind.

Auf den Bürstenträger 40 ist eine als Ganzes mit 60 bezeichnete Abdeckhaube aufsetzbar, welche eine von der Trägerplatte 22 ausgehend sich parallel zum Ringkörper 54 erstreckende Außenwand 62 aufweist, welche in eine ungefähr parallel zur Trägerplatte 42 verlaufende Stirnwand 64 übergeht, an welche sich beispielsweise noch eine in Fortsetzung des Ringkörpers 64 erstreckende Innenwand 66 anschließt, die ebenfalls noch teilweise den Aufnahmeraum 22 umschließt und dann von der Stirnwand 64 bis zum Ringkörper 54 verläuft.

Vorzugsweise ist der Ringkörper 54 mit einer sich vorzugsweise in einer senkrecht zur Drehachse 24 verlaufenden Ebene 68 liegenden Stirnseite 70 versehen, welche eine ringförmig umlaufende Nut 72 aufweist, in welcher eine Dichtung 74 angeordnet ist, auf welcher die Innenwand 66 mit einer dem Ringkörper 54 zugewandten Stirnseite aufliegt, vorzugsweise kraftbeaufschlagt aufliegt.

Ferner ist die Trägerplatte 42 mit einer an ihrer Außenseite umlaufenden Nut 78 versehen, auf welcher die Außenwand 62 der Abdeckhaube 60 mit einer der Trägerplatte 42 zugewandten Stirnseite 80 aufliegt.

Zum Fixieren der Abdeckhaube 60 ist im Bereich der Stirnseite 80 an die Außenwand 62 eine Umbördelung 82 angeformt, welche eine Außenkontur 84 der Trägerplatte 42 C-förmig umgreift und insbesondere noch mit einem umgebördelten Flansch 86 auf einer dem Anker 16 zugewandten Seite der Trägerplatte 42 nahe der Außenkontur 84 anliegt.

Der Bürstenträger 40 und die Abdeckhaube 60 bilden zusammen somit ein Elektronikgehäuse 90 der Stromversorgungseinheit 20, wobei ein Innenraum 92 des Elektronikgehäuses durch den nach außen feuchtigkeits- und/oder gasdicht ausgebildeten Bürstenträger 40 sowie die Abdeckhaube 60, die außerdem feuchtigkeits- und/oder gasdicht miteinander verbunden sind, hermetisch abgeschlossen ist, so daß in diesem Innenraum 90 eine als Ganzes mit 100 bezeichnete elektronische Schaltungseinheit, insbesondere eine Steuerschaltung für den Elektromotor, umfassend vorzugsweise eine Schaltungsplatine 102 und elektronische Bauelemente, unter anderem elektronische Leistungsbauteile 104 insbesondere Leitungshalbleiter, einen Prozessor 105 und Kondensatoren 106, angeordnet werden kann, ohne daß zusätzliche Schutzmaßnahmen für die Schaltungseinheit 100, wie beispielsweise ein Vergießen derselben mit einer Vergußmasse, beispielsweise ein Vergußharz, erforderlich sind, da das Elektronikgehäuse 90 auch bei Anordnung der Stromversorgungseinheit 20 in für ein Kraftfahrzeug üblichen Umgebungsbedingungen einen ausreichenden Schutz für die Schaltungseinheit 100 gegen diese beeinträchtigende äußere Einflüsse liefert.

Die Schaltungsplatine 102 ist in die Abdeckhaube 60 so eingelegt, daß sie nahe an der Stirnwand 64 der Abdeckhaube 60 liegt, wobei die Schaltungsplatine 102 vorzugsweise ringförmig ausgebildet ist und durch die Außenwand 62 und die Innenwand 66 zentriert gehalten wird.

Ferner sind die Leistungshalbleiter 104 auf einer dem Bürstenträger 40 zugewandten Seite der Schaltungsplatine 102 angeordnet und erstrecken sich von dieser in Richtung des Bürstenträgers 40.

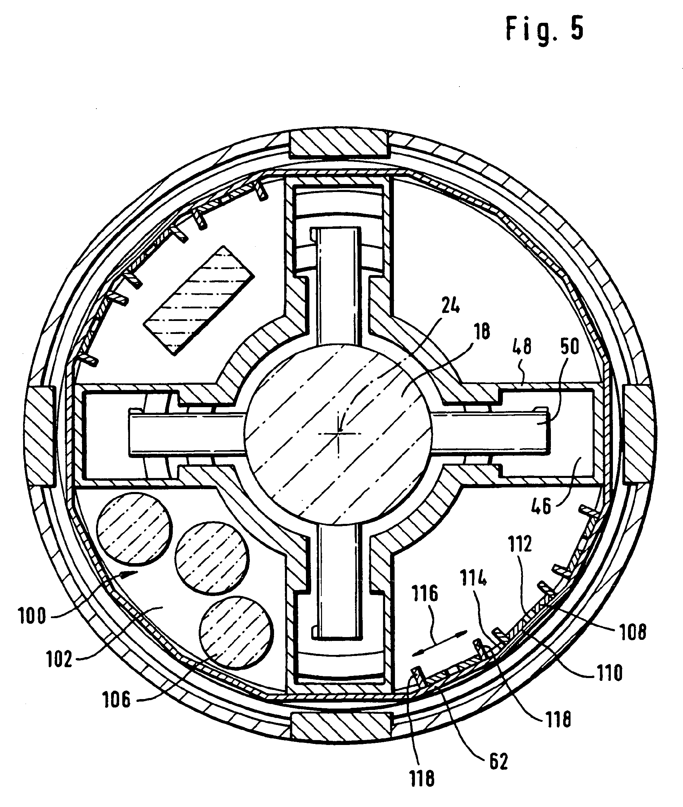

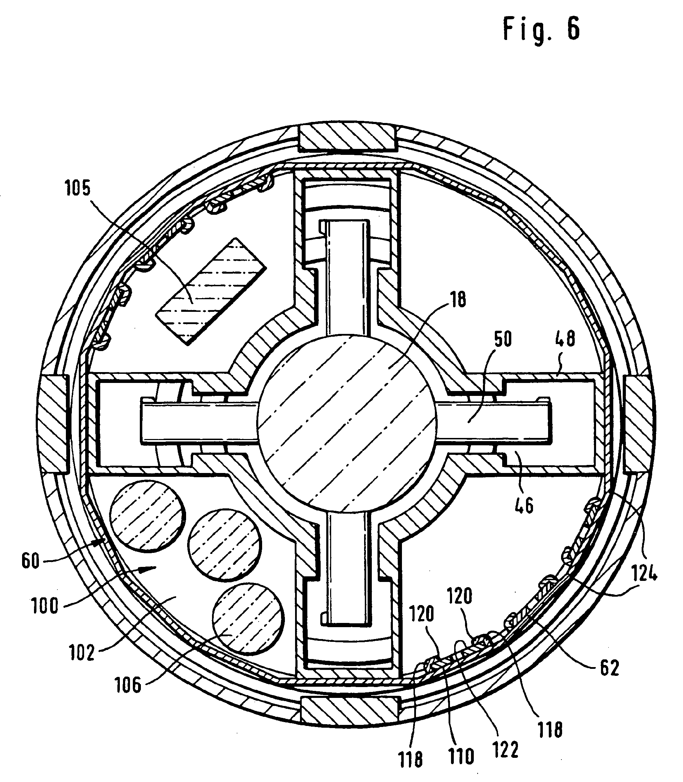

Wie in Fig. 5 und 6 dargestellt, sind die Leistungshalbleiter 104 auf der Schaltungsplatine 102 so angeordnet, daß sie mit ihren zur Kühlung vorgesehenen Kühlkörpern 108, welche vorzugsweise Flachseiten 110 aufweisen, so ausgerichtet sind, daß die Flachseiten 110 an abgeflachten Bereichen 112 einer Innenfläche 114 der Außenwand 62 der Abdeckhaube 60 anliegen. Um die Kühlkörper 108 ferner an den abgeflachten Bereichen 112 in Anlage zu halten, um einen optimalen Wärmeübergang von dem Kühlkörper 108 auf die Außenwand 62 zu ermöglichen, sind in einer Azimutalrichtung 116 zur Drehachse 24 beiderseits der Kühlkörper 108 an der Außenwand 62 radial nach innen vorspringende Stege 118 angeformt, welche, wie in Fig. 5 dargestellt, zunächst radial nach innen überstehen und einen derartigen Abstand aufweisen, daß die Schaltungseinheit 100 mit den auf dieser angeordneten Halbleiterschaltern 104 und deren Kühlkörper 108 in die Abdeckhaube 60 einsetzbar ist, wobei die Kühlkörper 108 dabei zwischen die Stege 118 einschiebbar sind.

Eine feste Fixierung der Kühlkörper 108 erfolgt dann, wie in Fig. 6 dargestellt, durch Umbördeln der Stege 118 derart, daß deren Stegenden 120 die Kühlkörper 108 auf ihrer der Flachseite 110 und der Außenwand 62 abgewandten Seite 122 beaufschlagen und damit die Flachseite 110 des Kühlkörpers 108 gegen den abgeflachten Bereich 112 für den jeweiligen Kühlkörper 108 pressen, so daß ein dauerhaft guter Wärmeübergang zwischen dem Kühlkörper 108 und der Außenwand 62 gewährleistet ist.

Vorzugsweise ist die Außenwand 62 zur Ausbildung der abgeflachten Bereiche 112 als polygonförmiger Zylinder ausgebildet, so daß sich zwischen einzelnen Kanten 124 des polygonförmigen Zylinders zwangsläufig ebene Wandbereiche bilden, die auf ihrer Innenseite die abgeflachten Bereiche 112 aufweisen.

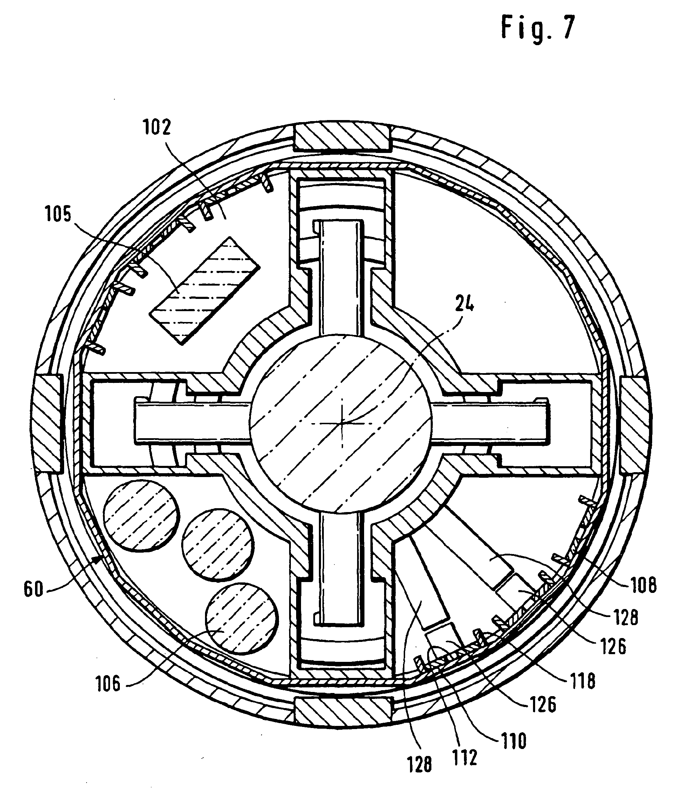

Bei einem zweiten Ausführungsbeispiel, dargestellt in Fig. 7 erfolgt alternativ zum Umbiegen der Stege 118 das Einsetzen eines Federkörpers 126, welcher sich gegenüber einem beispielsweise auf der Schaltungsplatine 102 angeordneten Widerlager 128 abstützt und somit ständig federnd den Kühlkörper 108 mit der Flachseite 110 gegen den abgeflachten Bereich 112 der Außenwand 62 angelegt hält.

Im übrigen ist das zweite Ausführungsbeispiel in gleicher Weise wie das erste Ausführungsbeispiel aufgebaut, so daß hinsichtlich der weiteren Elemente und der Funktion vollinhaltlich auf die Ausführungen zum ersten Ausführungsbeispiel Bezug genommen wird.

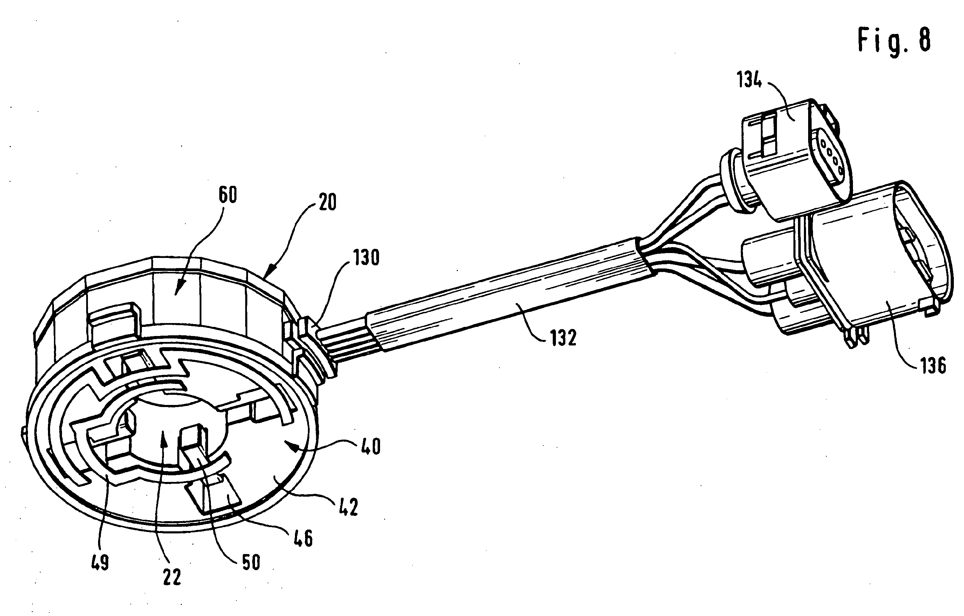

Insbesondere ist bei beiden Ausführungsbeispielen, wie in Fig. 8 dargestellt, die Stromversorgungseinheit 20 jeweils noch mit einer hermetisch gegenüber der Abdeckhaube 60 und dem Bürstenträger 40 abgedichteten Kabeldurchführung 130 versehen, welche beispielsweise durch Umspritzen von durch die Abdeckhaube 60 durchgeführten Kabeln herstellbar ist, und einem von der Stromversorgungseinheit 20 weg führenden Kabelbaum 132, welcher von der Stromversorgungseinheit 20 zu Steckereinheiten 134 und 136 führt, welche an entsprechenden Gegenstücken in einem Kraftfahrzeug anschließbar sind.

Die gesamte Stromversorgungseinheit 20 mit dem Kabelbaum 132 und den Steckereinheiten 134 und 136 ist somit als einheitliche Baugruppe für einen Elektromotor zulieferbar, wobei die Schaltungseinheit 100 in der Stromversorgungseinheit 20 vorzugsweise einen Prozessor 105 umfaßt, welcher programmgesteuert Halbleiterschalter 104 als Leistungshalbleiter derart ansteuert, daß ein pulsweitenmodulierter Betrieb des Elektromotors möglich ist, wobei die Pulsweitenmodulation entsprechend über den Kabelbaum 132 zugeführte Sensorsignale erfolgt, so daß beispielsweise eine der Steckereinheiten 134 oder 136 eine unmittelbare Verbindung mit einem entsprechenden Sensor herstellt.

Zur Kühlung der Abdeckhaube 60 ist das Elektronikgehäuse 90 derart in dem Motorgehäuse 10 angeordnet, daß die Abdeckhaube 60 von einem Kühlluftstrom 140 umströmt ist, welcher, wie in Fig. 1 und 2 dargestellt, mit einem Teilstrom 142 einen Zwischenraum 144 zwischen der Abdeckhaube 60 und dem Gehäuse 10, insbesondere dem Gehäusedeckel 28, durchströmt und mit einem Teilstrom 146 dem Aufnahmeraum 22 des Kommutators 18 durchströmt.

Insbesondere das Umströmen der Außenwand 62 der Abdeckhaube 40 durch den Kühlluftstrom 142 hat eine besonders effiziente Wärmeabfuhr zur Folge, da an dieser die Leitungshalbleiter 104 anliegen und Wärme übertragen.

## Patentansprüche

1. Stromversorgungseinheit (20) für einen Kommutator (18) eines Elektromotors, umfassend eine elektronische Schaltungseinheit (100), einen Bürstenträger (40) mit in diesem angeordneten und mit dem Kommutator (18) zusammenwirkenden Bürsten (50), wobei die Stromversorgungseinheit (20) ein in einem Motorgehäuse (10) vorzusehendes Elektronikgehäuse (90) umfasst, welches durch den Bürstenträger (40) und eine mit diesem verbundene Abdeckhaube (60) gebildet ist, und die in dem Bürstenträger (40) angeordneten Bürsten (50) außerhalb des von dem Elektronikgehäuse (90) gebildeten Innenraums (92) angeordnet sind,
**dadurch gekennzeichnet, dass** das Elektronikgehäuse (90) einen Innenraum (92) aufweist, in welchem eine elektronische Schaltungseinheit (100) mit elektronischen Leistungsbauteilen (104) angeordnet ist,
und dass der Innenraum (92) durch den nach außen feuchtigkeits- und/oder gasdicht ausgebildeten Bürstenträger (40) sowie die Abdeckhaube (60), die außerdem feuchtigkeits- und/oder gasdicht miteinander verbunden sind, hermetisch abgeschlossen, gegen Zutritt von Schmutz und Feuchtigkeit geschützt und somit funktionssicher und vergussmassenfrei gegenüber einer Umgebung abgedichtet ist.

2. Stromversorgungseinheit nach Anspruch 1, **dadurch gekennzeichnet, dass** sich das Elektronikgehäuse (90) ringförmig um einen Aufnahmeraum (22) für den Kommutator (18) erstreckt.

3. Stromversorgungseinheit nach einem der voranstehenden Ansprüche, **dadurch gekennzeichnet, dass** der Bürstenträger (40) aus einem elektrisch nicht leitenden Material hergestellt ist.

4. Stromversorgungseinheit nach einem der voranstehenden Ansprüche, **dadurch gekennzeichnet, dass** der Bürstenträger (40) eine sich quer zu einer Drehachse (24) des Kommutators (18) erstreckende Trägerplatte (42) aufweist.

5. Stromversorgungseinheit nach Anspruch 4, **dadurch gekennzeichnet, dass** der Bürstenträger (40) auf einer der Abdeckhaube (60) zugewandten Seite der Trägerplatte (42) angeordnete und durch Kanalgehäuse (48) umschlossene Bürstenkanäle (46) aufweist.

6. Stromversorgungseinheit nach einem der voranstehenden Ansprüche, **dadurch gekennzeichnet, dass** der Bürstenträger (40) einen einen Aufnahmeraum (22) für den Kommutator (18) umschließenden Ringkörper (54) aufweist.

7. Stromversorgungseinheit nach einem der Ansprüche 2 bis 6, **dadurch gekennzeichnet, dass** die Abdeckhaube (60) sich radial zu einer Drehachse (24) des Kommutators (18) außerhalb des Aufnahmeraums (22) für den Kommutator (18) erstreckt.

8. Stromversorgungseinheit nach Anspruch 7, **dadurch gekennzeichnet, dass** die Abdeckhaube (60) mit einer Innenwand (66) den Aufnahmeraum (22) für den Kommutator (18) umschließt.

9. Stromversorgungseinheit nach Anspruch 8, **dadurch gekennzeichnet, dass** die Innenwand (66) in Fortsetzung des Ringkörpers (54) des Bürstenträgers (40) verläuft.

10. Stromversorgungseinheit nach Anspruch 8 oder 9, **dadurch gekennzeichnet, dass** die Innenwand (66) abgedichtet an dem Ringkörper (54) des Bürstenträgers (40) anliegt.

11. Stromversorgungseinheit nach einem der voranstehenden Ansprüche, **dadurch gekennzeichnet, dass** die Abdeckhaube (60) eine Außenwand (62) aufweist und dass die Außenwand (62) abgedichtet mit der Trägerplatte (42) des Bürstenträgers (40) abschließt.

12. Stromversorgungseinheit nach Anspruch 11, **dadurch gekennzeichnet, dass** die Außenwand (62) der Abdeckhaube (60) an der Trägerplatte (42) des Bürstenträgers (40) fixiert ist.

13. Stromversorgungseinheit nach Anspruch 12, oder 13, **dadurch gekennzeichnet, dass** die Abdeckhaube (60) mit einer Umbördelung (82) an der Trägerplatte (42) des Bürstenträgers (40) fixiert ist.

14. Stromversorgungseinheit nach Anspruch 13, **dadurch gekennzeichnet, dass** die Umbördelung (82) eine Außenkontur (84) der Trägerplatte (42) im wesentlichen umgreift.

15. Stromversorgungseinheit nach einem der voranstehenden Ansprüche, **dadurch gekennzeichnet, dass** die Abdeckhaube (60) einen Kühlkörper für mindestens ein Leistungsbauteil (104) der Schaltungseinheit (100) bildet.

16. Stromversorgungseinheit nach Anspruch 15, **dadurch gekennzeichnet, dass** das mindestens eine Leistungsbauteil (104) durch einen Federkörper (126) kraftbeaufschlagt an der Abdeckhaube (60) anliegt.

17. Stromversorgungseinheit nach Anspruch 15 oder 16, **dadurch gekennzeichnet, dass** das mindestens eine Leistungsbauteil (104) mit seinem Kühlkörper (108) an einer Innenseite (114) der Abdeckhaube (60) anliegt.

18. Stromversorgungseinheit nach einem der Ansprüche 15 bis 17, **dadurch gekennzeichnet, dass** das mindestens eine Leistungsbauteil (104) an einer für dieses vorgesehenen Wärmekontaktstelle (112) der Abdeckhaube (60) anliegt.

19. Stromversorgungseinheit nach Anspruch 18, **dadurch gekennzeichnet, dass** das mindestens eine Leistungsbauteil (104) mit seinem Kühlkörper (108) an einem abgeflachten Bereich (112) der Innenseite (114) der Abdeckhaube (60) anliegt.

20. Stromversorgungseinheit nach Anspruch 19, **dadurch gekennzeichnet, dass** der abgeflachte Bereich (112) an der Innenseite (114) einer mit der Trägerplatte (42) des Bürstenträgers (40) abgedichte abschließenden Außenwand (62) der Abdeckhaube (60) angeordnet ist.

21. Stromversorgungseinheit nach einem der Ansprüche 15 bis 20, **dadurch gekennzeichnet, dass** die Abdeckhaube (60) mit in den Innenraum (92) vorstehenden Stegen (118) versehen ist, zwischen denen der Kühlkörper (108) des mindestens einen Leistungsbauteils (104) liegt.

22. Stromversorgungseinheit nach Anspruch 21, **dadurch gekennzeichnet, dass** die Stege (118) durch in Richtung des Kühlkörpers (108) des mindestens einen Leistungsbauteils (104) umgebogene Stegenden (120) den Kühlkörper (108) des mindestens einen Leistungsbauteils (104) an der Abdeckhaube (60) fixieren.

23. Stromversorgungseinheit nach Anspruch 21 oder 22, **dadurch gekennzeichnet, dass** die Stege (118) mit ihren umgebogenen Stegenden (120) den Kühlkörper (108) gegen die Abdeckhaube (60) gedrückt halten.

24. Stromversorgungseinheit nach einem der voranstehenden Ansprüche, **dadurch gekennzeichnet, dass** die Abdeckhaube (60) aus Metall ist.

25. Stromversorgungseinheit nach Anspruch 24, **dadurch gekennzeichnet, dass** die Abdeckhaube (60) aus einem plastisch verformbaren Metall hergestellt ist.

26. Stromversorgungseinheit nach Anspruch 24 oder 25, **dadurch gekennzeichnet, dass** die Abdeckhaube (60) aus Leichtmetall hergestellt ist.

27. Stromversorgungseinheit nach einem der voranstehenden Ansprüche, **dadurch gekennzeichnet, dass** die Schaltungseinheit (100) eine ringförmige in der Abdeckhaube (60) angeordnete Schaltungsplatine (102) aufweist.

28. Stromversorgungseinheit nach einem der voranstehenden Ansprüche, **dadurch gekennzeichnet, dass** die Leistungsbauteile (104) auf einer dem Bürstenträger (40) zugewandten Seite einer Schaltungsplatine (102) der Schaltungseinheit (100) angeordnet sind.

29. Elektromotor umfassend ein Motorgehäuse (10) einen im Motorgehäuse (10) drehbar angeordneten Rotor (12) und einen im Motorgehäuse (10) angeordneten Bürstenträger (40), **dadurch gekennzeichnet, dass** der Elektromotor mit einer Stromversorgungseinheit (20) nach einem der Ansprüche 1 bis 28 versehen ist.

30. Elektromotor nach Anspruch 29, **dadurch gekennzeichnet, dass** die Abdeckhaube (60) im Motorgehäuse (10) von Kühlluft (140) umströmbar angeordnet ist.

31. Elektromotor nach Anspruch 30, **dadurch gekennzeichnet, dass** die Kühlluft (140) durch einen Zwischenraum (144) zwischen dem Motorgehäuse (10) und der Abdeckhaube (60) hindurchtritt.

32. Elektromotor nach Anspruch 30 oder 31, **dadurch gekennzeichnet, dass** die Kühlluft (140) durch den Aufnahmeraum (22) für den Kommutator (18) hindurchtritt.

## Claims

1. Power supply unit (20) for a commutator (18) of an electric motor, comprising an electronic circuit module (100), a brush holder support (40) with brushes (50) arranged in it and interacting with the commutator (18), wherein the power supply unit (20) comprises an electronics housing (90) to be provided in a motor housing (10) and formed by the brush holder support (40) and a protective cover (60) connected to it and the brushes (50) arranged in the brush holder support (40) are arranged outside the interior (92) formed by the electronics housing (90), **characterized in that** the electronics housing (90) has an interior (92), an electronic circuit module (100) with electronic power components (104) being arranged in said interior, and that the interior (92) is hermetically sealed, protected against any entry of dirt and moisture and is, therefore, sealed in relation to the surroundings in a functionally reliable manner and free from any casting compounds by means of the brush holder support (40) designed to be moisture-proof and/or gas-tight towards the outside as well as the protective cover (60), said brush holder support and said protective cover also being connected to one another so as to be moisture-proof and/or gas-tight.

2. Power supply unit as defined in claim 1, **characterized in that** the electronics housing (90) extends in an annular shape around a receiving chamber (22) for the commutator (18).

3. Power supply unit as defined in any one of the preceding claims, **characterized in that** the brush holder support (40) is produced from an electrically non-conductive material.

4. Power supply unit as defined in any one of the preceding claims, **characterized in that** the brush holder support (40) has a supporting plate (42) extending transversely to an axis of rotation (24) of the commutator (18).

5. Power supply unit as defined in claim 4, **characterized in that** the brush holder support (40) has brush channels (46) arranged on a side of the supporting plate (42) facing the protective cover (60) and surrounded by channel housings (48).

6. Power supply unit as defined in any on the preceding claims, **characterized in that** the brush holder support (40) has an annular member (54) surrounding a receiving chamber (22) for the commutator (18).

7. Power supply unit as defined in any one of claims 2 to 6, **characterized in that** the protective cover (60) extends radially to an axis of rotation (24) of the commutator (18) outside the receiving chamber (22) for the commutator (18).

8. Power supply unit as defined in claim 7, **characterized in that** the protective cover (60) surrounds the receiving chamber (22) for the commutator (18) with an inner wall (66).

9. Power supply unit as defined in claim 8, **characterized in that** the inner wall (66) extends in continuation of the annular member (54) of the brush holder support (40).

10. Power supply unit as defined in claim 8 or 9, **characterized in that** the inner wall (66) abuts in a sealed manner on the annular member (54) of the brush holder support (40).

11. Power supply unit as defined in any one of the preceding claims, **characterized in that** the protective cover (60) has an outer wall (62) and that the outer wall (62) terminates in a sealed manner with the supporting plate (42) of the brush holder support (40).

12. Power supply unit as defined in claim 11, **characterized in that** the outer wall (62) of the protective cover (60) is fixed to the supporting plate (42) of the brush holder support (40).

13. Power supply unit as defined in claim 11 or 12, **characterized in that** the protective cover (60) is fixed to the supporting plate (42) of the brush holder support (40) with a bead (82).

14. Power supply unit as defined in claim 13, **characterized in that** the bead (82) essentially engages around an outer contour (84) of the supporting plate (42).

15. Power supply unit as defined in any one of the preceding claims, **characterized in that** the protective cover (60) forms a cooling member for at least one power component (104) of the circuit module (100).

16. Power supply unit as defined in claim 15, **characterized in that** the at least one power component (104) abuts on the protective cover (60) acted upon by a force from a spring member (126).

17. Power supply unit as defined in claim 15 or 16, **characterized in that** the at least one power component (104) abuts with its cooling member (108) on an inner side (114) of the protective cover (60).

18. Power supply unit as defined in any one of claims 15 to 17, **characterized in that** the at least one power component (104) abuts on a heat contact point (112) of the protective cover (60) provided for it.

19. Power supply unit as defined in claim 18, **characterized in that** the at least one power component (104) abuts with its cooling member (108) on a flattened area (112) of the inner side (114) of the protective cover (60).

20. Power supply unit as defined in claim 19, **characterized in that** the flattened area (112) is arranged on the inner side (114) of a terminating outer wall (62) of the protective cover (60) sealed with the supporting plate (42) of the brush holder support (40).

21. Power supply unit as defined in any one of claims 15 to 20, **characterized in that** the protective cover (60) is provided with arms (118) protruding into the interior (92), the cooling member (108) of the at least one power component (104) being located between said arms.

22. Power supply unit as defined in claim 21, **characterized in that** the arms (118) fix the cooling member (108) of the at least one power component (104) on the protective cover (60) by means of arm ends (120) bent over in the direction of the cooling member (108) of the at least one power component (104).

23. Power supply unit as defined in claim 21 or 22, **characterized in that** the arms (118) hold the cooling member (108) pressed against the protective cover (60) with their bent arm ends (120).

24. Power supply unit as defined in any one of the preceding claims, **characterized in that** the protective cover (60) consists of metal.

25. Power supply unit as defined in claim 24, **characterized in that** the protective cover (60) is produced from a plastically deformable metal.

26. Power supply unit as defined in claim 24 or 25, **characterized in that** the protective cover (60) is produced from a light metal.

27. Power supply unit as defined in any one of the preceding claims, **characterized in that** the circuit module (100) has an annular circuit board (102) arranged in the protective cover (60).

28. Power supply unit as defined in any one of the preceding claims, **characterized in that** the power components (104) are arranged on a side of a circuit board (102) of the circuit module (100) facing the brush holder support (40).

29. Electric motor comprising a motor housing (10), a rotor (12) arranged in the motor housing (10) so as to be rotatable and a brush holder support (40) arranged in the motor housing (10), **characterized in that** the electric motor is provided with a power supply unit (20) as defined in any one of claims 1 to 28.

30. Electric motor as defined in claim 29, **characterized in that** the protective cover (60) is arranged in the motor housing (10) so as to have cooling air (140) flowing around it.

31. Electric motor as defined in claim 30, **characterized in that** the cooling air (140) passes through a space (144) between the motor housing (10) and the protective cover (60).

32. Electric motor as defined in claim 30 or 31, **characterized in that** the cooling air (140) passes through the receiving chamber (22) for the commutator (18).

## Revendications

1. Module d'alimentation électrique (20) pour un commutateur (18) d'un moteur électrique, comprenant un module de circuit électronique (100), un porte-balais (40) comprenant des balais (50) disposés dans celui-ci et fonctionnant de manière conjuguée avec le commutateur (18), où le module d'alimentation électrique (20) comprend un boîtier électronique (90) à prévoir dans un carter moteur (10), boîtier électronique qui est formé par le porte-balais (40) et par un chapeau de recouvrement (60) relié à celui-ci, et les balais (50) disposés dans le porte-balais (40) sont disposés à l'extérieur de l'espace intérieur (92) formé par le boîtier électronique (90),
**caractérisé**
**en ce que** le boîtier électronique (90) présente un espace intérieur (92) dans lequel est disposé un module de circuit électronique (100) comprenant des composants de puissance électroniques (104), et
**en ce que** l'espace intérieur (92), grâce au porte-balais (40) configuré en étant étanche à l'humidité et/ou aux gaz, par rapport à l'extérieur, ainsi que grâce au chapeau de recouvrement (60), qui sont en outre reliés l'un à l'autre en étant étanches à l'humidité et/ou aux gaz, est fermé hermétiquement, protégé contre la pénétration de salissures et d'humidité et, par conséquent, rendu étanche par rapport à un milieu environnant, en étant fonctionnellement fiable et exempt de mastic de remplissage.

2. Module d'alimentation électrique selon la revendication 1, **caractérisé en ce que** le boîtier électronique (90) s'étend, de façon annulaire, autour d'un espace de logement (22) prévu pour le commutateur (18).

3. Module d'alimentation électrique selon l'une ou l'autre des revendications précédentes, **caracté-risé en ce que** le porte-balais (40) est fabriqué dans un matériau non électroconducteur.

4. Module d'alimentation électrique selon l'une quelconque des revendications précédentes, **caractérisé en ce que** le porte-balais (40) présente une plaque support (42) s'étendant de façon transversale par rapport à un axe de rotation (24) du commutateur (18).

5. Module d'alimentation électrique selon la revendication 4, **caractérisé en ce que** le porte-balais (40) présente des canaux de balais (46) disposés sur un côté de la plaque support (42), tourné vers le chapeau de recouvrement (60), et entourés par un carter de canal (48).

6. Module d'alimentation électrique selon l'une quelconque des revendications précédentes, **caractérisé en ce que** le porte-balais (40) présente un corps annulaire (54) entourant un espace de logement (22) prévu pour le commutateur (18).

7. Module d'alimentation électrique selon l'une quelconque des revendications 2 à 6, **caractérisé en ce que** le chapeau de recouvrement (60) s'étend radialement par rapport à un axe de rotation (24) du commutateur (18), à l'extérieur de l'espace de logement (22) prévu pour le commutateur (18).

8. Module d'alimentation électrique selon la revendication 7, **caractérisé en ce que** le chapeau de recouvrement (60) entoure, par une paroi intérieure (66), l'espace de logement (22) prévu pour le commutateur (18).

9. Module d'alimentation électrique selon la revendication 8, **caractérisé en ce que** la paroi intérieure (66) s'étend dans le prolongement du corps annulaire (54) du porte-balais (40).

10. Module d'alimentation électrique selon la revendication 8 ou 9, **caractérisé en ce que** la paroi intérieure (66) s'applique de façon étanche sur le corps annulaire (54) du porte-balais (40).

11. Module d'alimentation électrique selon l'une quelconque des revendications précédentes, **caractérisé en ce que** le chapeau de recouvrement (60) présente une paroi extérieure (62), et **en ce que** la paroi extérieure (62) est fermée de façon étanche par la plaque support (42) du porte-balais (40).

12. Module d'alimentation électrique selon la revendication 11, **caractérisé en ce que** la paroi extérieure (62) du chapeau de recouvrement (60) est fixée sur la plaque support (42) du porte-balais (40).

13. Module d'alimentation électrique selon la revendication 11 ou 12, **caractérisé en ce que** le chapeau de recouvrement (60) est fixé, par un bord rabattu (82), sur la plaque support (42) du porte-balais (40).

14. Module d'alimentation électrique selon la revendication 13, **caractérisé en ce que** le bord rabattu (82) enserre pratiquement un contour extérieur (84) de la plaque support (42).

15. Module d'alimentation électrique selon l'une quelconque des revendications précédentes, **caractérisé en ce que** le chapeau de recouvrement (60) forme un refroidisseur pour au moins un composant de puissance (104) du module de connexion (100).

16. Module d'alimentation électrique selon la revendication 15, **caractérisé en ce que** le au moins un composant de puissance (104) s'applique sur le chapeau de recouvrement (60), en étant sollicité par la force d'un corps à ressort (126).

17. Module d'alimentation électrique selon la revendication 15 ou 16, **caractérisé en ce que** le au moins un composant de puissance (104) s'applique, par son refroidisseur (108), sur un côté intérieur (114) du chapeau de recouvrement (60).

18. Module d'alimentation électrique selon l'une quelconque des revendications 15 à 17, **caractérisé en ce que** le au moins un composant de puissance (104) s'applique sur un point de contact thermique (112) du chapeau de recouvrement (60) prévu pour ce composant de puissance.

19. Module d'alimentation électrique selon la revendication 18, **caractérisé en ce que** le au moins un composant de puissance (104) s'applique, par son refroidisseur (108), sur une zone aplatie (112) du côté intérieur (114) du chapeau de recouvrement (60).

20. Module d'alimentation électrique selon la revendication 19, **caractérisé en ce que** la zone aplatie (112) est disposée sur un côté intérieur (114) d'une paroi extérieure (62) du chapeau de recouvrement (60), fermée de façon étanche par la plaque support (42) du porte-balais (40).

21. Module d'alimentation électrique selon l'une quelconque des revendications 15 à 20, **caractérisé en ce que** le chapeau de recouvrement (60) est doté de parties saillantes (118) dépassant dans l'espace intérieur (92), parties saillantes entre lesquelles se trouve le refroidisseur (108) du au moins un composant de puissance (104).

22. Module d'alimentation électrique selon la revendication 21, **caractérisé en ce que** les parties saillantes (118) fixent le refroidisseur (108) du au moins un composant de puissance (104), sur le chapeau de recouvrement (60), par des extrémités (120) des parties saillantes recourbées en direction du refroidisseur (108) du au moins un composant de puissance (104).

23. Module d'alimentation électrique selon la revendication 21 ou 22, **caractérisé en ce que** les parties saillantes (118), par leurs extrémités recourbées (120), maintiennent le refroidisseur (108) en appui contre le chapeau de recouvrement (60).

24. Module d'alimentation électrique selon l'une quelconque des revendications précédentes, **caractérisé en ce que** le chapeau de recouvrement (60) est en métal.

25. Module d'alimentation électrique selon la revendication 24, **caractérisé en ce que** le chapeau de recouvrement (60) est fabriqué dans un matériau plastiquement déformable.

26. Module d'alimentation électrique selon la revendication 24 ou 25, **caractérisé en ce que** le chapeau de recouvrement (60) est fabriqué dans un métal léger.

27. Module d'alimentation électrique selon l'une quelconque des revendications précédentes, **caractérisé en ce que** le module de connexion (100) présente une platine de connexion (102), de forme annulaire, disposée dans le chapeau de recouvrement (60).

28. Module d'alimentation électrique selon l'une quelconque des revendications précédentes, **caractérisé en ce que** les composants de puissance (104) sont disposés sur un côté d'une platine de connexion (102) du module de connexion (100), tourné vers le porte-balais (40).

29. Moteur électrique comprenant un carter moteur (10), un rotor (12) disposé de manière à pouvoir tourner dans le carter moteur (10) et un porte-balais (40) disposé dans le carter moteur (10), **caractérisé en ce que** le moteur électrique est doté d'un module d'alimentation électrique (20) selon l'une quelconque des revendications 1 à 28.

30. Moteur électrique selon la revendication 29, **caractérisé en ce que** le chapeau de recouvrement (60) est disposé dans le carter moteur (10), en pouvant être baigné par de l'air froid (140).

31. Moteur électrique selon la revendication 30, **caractérisé en ce que** de l'air froid (140) traverse un espace intermédiaire (144) placé entre le carter moteur (10) et le chapeau de recouvrement (60).

32. Moteur électrique selon la revendication 30 ou 31, **caractérisé en ce que** de l'air froid (140) traverse l'espace de logement (22) prévu pour le commutateur (18).
